# FASCICULE DE BREVET EUROPEEN

(11) **EP 3 317 912 B1**
(45) Date de publication et mention de la délivrance du brevet: **17.04.2019**
(21) Numéro de dépôt: 16741357.4
(22) Date de dépôt: 28.06.2016
(51) Int. Cl.: H01M 10/0525, H01M 10/0567, H01M 10/42, H01M 10/054, H01M 12/08

(54) **COMPOSÉ UTILISÉ EN TANT QU'ADDITIF DANS UN ÉLECTROLYTE POUR BATTERIE À CIRCULATION D'IONS**
VERBINDUNG ALS ADDITIV IN EINEM ELEKTROLYT FÜR EINE IONENFLUSSBATTERIE
COMPOUND USED AS ADDITIVE IN AN ELECTROLYTE FOR AN ION-FLOW BATTERY

(30) Priorité: 01.07.2015 FR 1556222
(43) Date de publication de la demande: 09.05.2018
(73) Titulaire: Renault S.A.S., 92100 Boulogne-Billancourt (FR); Université de Picardie Jules Verne, 80025 Amiens Cedex 1 (FR); Centre National de la Recherche Scientifique, 75016 Paris (FR)
(72) Inventeur: FORESTIER, Coralie, 80250 Rouvrel (FR); GRUGEON, Sylvie, 60960 Feuquieres (FR); LARUELLE, Stéphane, 80470 Saveuse (FR); ARMAND, Michel, 75014 Paris (FR); SANNIER, Lucas, 28500 Vernouillet (FR); COSER, Laura, 78290 Croissy (FR)
(74) Mandataire: Peguet, Wilfried
(86) Numéro de dépôt international: PCT/FR2016/051589
(87) Numéro de publication internationale: WO 2017/001759

(56) Documents cités:
- FR-A1- 2 928 925
- JP-A- 2009 123 499
- US-A1- 2013 004 861
- BARTOLOME SOBERATS ET AL: "Zwitterionic liquid crystals as 1D and 3D lithium ion transport media", JOURNAL OF MATERIALS CHEMISTRY A: MATERIALS FOR ENERGY AND SUSTAINABILITY, vol. 3, no. 21, 20 mars 2015 (2015-03-20), pages 11232-11238, XP055271683, GB ISSN: 2050-7488, DOI: 10.1039/C5TA00814J
- FORESTIER CORALIE ET AL: "Facile reduction of pseudo-carbonates: Promoting solid electrolyte interphases with dicyanoketene alkylene acetals in lithium-ion batteries", JOURNAL OF POWER SOURCES, vol. 303, 3 novembre 2015 (2015-11-03), pages 1-9, XP029331723, ISSN: 0378-7753, DOI: 10.1016/J.JPOWSOUR.2015.10.103

## Description

La présente invention se rapporte à un composé utilisé en tant qu'additif dans un électrolyte pour batterie fonctionnant par circulation d'ions, à un électrolyte comprenant ledit composé, audit électrolyte utilisé dans une batterie fonctionnant par circulation d'ions, et à une batterie comprenant ledit électrolyte.

Elle s'applique typiquement, mais non exclusivement, aux domaines des batteries fonctionnant avec des ions lithium (Li⁺) ou des ions sodium (Na⁺), comme vecteur électrochimique. A titre d'exemple, on peut citer les batteries lithium-ion (Li-ion), sodium-ion (Na-ion), lithium-air (Li-air) et lithium-soufre (Li-soufre).

Les batteries sont des dispositifs de stockage d'énergie tels que des générateurs électrochimiques fonctionnant sur le principe de cellules électrochimiques montées en série ou en parallèle, aptes à délivrer un courant électrique, grâce à la présence, dans chacune d'entre elles, d'un couple d'électrodes (au moins une électrode positive et au moins une électrode négative) séparé par un électrolyte, les électrodes étant en des matériaux spécifiques aptes à réagir ensemble selon une réaction d'oxydo-réduction pour produire des électrons à l'origine du courant électrique et produire des ions qui vont circuler d'une électrode vers l'autre par le biais d'un électrolyte.

Les générateurs peuvent être plus particulièrement des générateurs au lithium ou au sodium, fonctionnant sur le principe de l'insertion-désinsertion du lithium ou du sodium, respectivement. On parle notamment de batteries Li-ion ou de batteries Na-ion, respectivement.

Dans les batteries Li-ion, l'électrolyte liquide est un composant essentiel qui détermine les performances et la sécurité du système. Les solvants organiques de l'électrolyte sont connus pour se réduire lors de la première charge de la batterie et former une couche protectrice, dite de passivation, à la surface de l'électrode négative, nommée « *Solid Electrolyte Interphase »* (SEI).

Cette couche, en empêchant la dégradation ultérieure de cet électrolyte, permet ainsi au système de fonctionner. Le renforcement de cette couche est ainsi primordial pour assurer son caractère protecteur tout au long du cycle de vie de la batterie et pour limiter la perte de capacité lors du premier cycle de charge/décharge.

De nombreux efforts sont réalisés pour trouver les molécules capables de se réduire avant les solvants et créer une couche plus protectrice vis-à-vis de la dégradation de l'électrolyte, et également plus résistante à une augmentation de température.

A titre d'exemple, on peut citer le document WO2015033619 qui décrit une batterie secondaire comprenant une électrode positive, une électrode négative, et un électrolyte non-aqueux composé d'un sel de lithium dissout dans un solvant non-aqueux et d'un composé dinitrile linéaire du type NC-(CH₂)ₙ-CN, « n » étant un entier supérieur ou égal à 1.

Cependant, ce type de composé ne permet pas d'obtenir une couche SEI suffisamment protectrice au sein d'une batterie fonctionnant par circulation d'ions.

Les documents FR 2 928 925 A1, US 2013/004861 A1 et JP 2009 123499 A décrivent l'utilisation de composés en tant qu'additifs dans des électrolytes, lesdits composés comprenant au moins un groupement 1,1-dicyanovinyle.

Le but de la présente invention est de pallier les inconvénients des techniques de l'art antérieur en proposant d'utiliser un composé en tant qu'additif pour électrolyte de batterie fonctionnant par circulation d'ions, permettant de former une couche de passivation optimisant notamment le fonctionnement de ladite batterie par diminution de la perte de capacité lors du premier cycle de charge/décharge.

La présente invention a pour objet une utilisation d'au moins un composé en tant qu'additif dans un électrolyte pour batterie fonctionnant par circulation d'ions, ledit composé comprenant au moins un groupement 1,1 -dicyanovinyle, ledit composé étant tel que défini dans la revendication 1.

Grâce à l'invention, une batterie comprenant ledit additif (i.e. le composé de l'invention utilisé en tant qu'additif) dans son électrolyte présente l'avantage de limiter de façon significative, voire d'éviter la perte de capacité lors du cyclage, ainsi que l'emballement thermique à l'interface électrode négative/électrolyte. L'additif permet avantageusement de former une couche de passivation préalablement à la réduction du ou des solvant(s) contenu(s) dans l'électrolyte.

### L'additif

Le composé utilisé en tant qu'additif, ou en d'autres termes l'additif, comprend au moins un groupement 1,1-dicyanovinyle.

L'additif de l'invention est choisi parmi un composé A, un composé B, et un de leurs mélanges,
- le composé A étant représenté par la formule suivante : 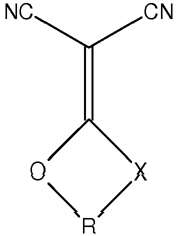 dans laquelle R est un groupement choisi parmi un groupement alkylène, éventuellement substitué ; un groupement alcénylène, éventuellement substitué ; un groupement halogéno-alkylène, éventuellement substitué ; et un groupement halogéno-alcénylène, éventuellement substitué ; et X est choisi parmi un atome d'oxygène, un groupement azoté, et un groupement alkylène ;
- le composé B étant représenté par la formule suivante : 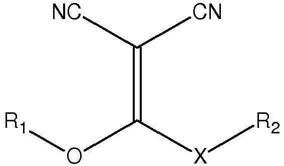 dans laquelle R1 et R2 sont des groupements identiques ou différents, choisis parmi des groupements alkyle, linéaires ou ramifiés ; des groupements alcényle, linéaires ou ramifiés ; des groupements halogéno-alkyle, linéaires ou ramifiés ; et des groupements halogéno-alcényle, linéaires ou ramifiés ; et X est choisi parmi un atome d'oxygène, un groupement azoté, et un groupement alkylène.

Les groupements halogéno-alkylène, halogéno-alcénylène, halogéno-alkyle et halogéno-alcényle peuvent être respectivement des groupements fluoro-alkylène, fluoro-alcénylène, fluoro-alkyle et fluoro-alcényle.

Le groupement R peut être un groupement en C₂-C₁₀, et de préférence en C₂-C₅. A titre d'exemple, le groupement R peut être choisi parmi les groupements -CH₂-CH₂-, -CH₂-CH₂-CH₂- et -CH(CH₃)-CH₂-.

Le groupement R₁ et/ou R₂ peut être un groupement en C₁-C₁₀, et de préférence en C₂-C₅. A titre d'exemple, le groupement R₁ et/ou R₂ peut être choisi parmi les groupements -CH₂-CH₃, -CH₂-CH₂-CH₃ et -CH(CH₃)-CH₃.

Lorsque X est un groupement azoté, ce dernier peut être un groupement du type N-R' avec R' choisi parmi un atome d'hydrogène ; un groupement alkyle, linéaire ou ramifié ; et un groupement alcényle, linéaire ou ramifié. Le groupement R' peut être de préférence un groupement en C₁-C₁₀, et de préférence en C₁-C₅.

Lorsque X est un groupement alkylène, ce dernier est de préférence un groupement -CH₂-.

Dans un mode de réalisation particulièrement préféré, l'additif est un composé non ionique.

### L'électrolyte

Un autre objet de l'invention concerne un électrolyte, ou en d'autres termes une composition d'électrolyte, comprenant au moins un solvant, et au moins un sel de métal alcalin, caractérisé en ce que l'électrolyte comprend en outre au moins un composé en tant qu'additif, ledit composé étant tel que défini dans la présente invention, et/ou un de ses produits de réaction.

L'électrolyte de l'invention peut être avantageusement utilisé dans une batterie fonctionnant par circulation d'ions.

Le ou les solvants ainsi que le ou les sels d'un métal alcalin de l'électrolyte peuvent être ceux classiquement utilisés dans les batteries Li-ion, Li-soufre, Li -air ou sodium-ion.

On entend par « un de ses produits de réaction » la forme réduite de l'additif de l'invention. La forme réduite dudit additif peut être obtenue soit par apport d'électrons lors de la première charge de la batterie, soit par une réaction d'oxydoréduction avec du lithium métallique.

Plus particulièrement, dans les batteries du type Li-ion ou Na-ion, tant que la première charge de la batterie n'a pas été réalisée, l'électrolyte comprend uniquement l'additif de l'invention sous forme non réduite.

Dans les batteries du type Li-soufre ou Li-air comprenant du lithium métallique, l'électrolyte comprend l'additif de l'invention sous forme non réduite et/ou l'additif de l'invention sous forme réduite.

### L'additif dans l'électrolyte

L'électrolyte peut ainsi comprendre ledit additif de l'invention et/ou au moins un des produits de réaction de l'additif de l'invention.

L'électrolyte de l'invention peut comprendre de 0,1 à 10,0 % en poids (bornes incluses) dudit additif, de préférence de 0,1 à 5,0 % en poids (bornes incluses) dudit additif, et de façon particulièrement préférée de 0,2 à 1,0 % en poids (bornes incluses) dudit additif, par rapport au poids total de l'électrolyte.

En d'autres termes, l'additif de l'invention peut être ajouté avantageusement à un électrolyte connu de l'homme du métier, dans les proportions indiquées ci-dessus.

### Le solvant

Le solvant de l'électrolyte de l'invention peut être un unique solvant ou un mélange de plusieurs solvants.

Le solvant de l'électrolyte peut être un solvant liquide, éventuellement gélifié par un polymère, ou un solvant polymère polaire éventuellement plastifié par un liquide.

Le solvant de l'électrolyte permet notamment de dissoudre le ou les sels d'un métal alcalin, ainsi que l'additif de l'invention.

Le solvant est de préférence un solvant aprotique. Plus particulièrement, le solvant est un solvant organique (i.e. solvant non aqueux) polaire.

A titre d'exemple, l'électrolyte de l'invention peut comprendre un ou plusieurs des solvants liquides choisis parmi :
- des carbonates, notamment cycliques, tels que par exemple le carbonate d'éthylène (EC), le carbonate de propylène (PC), le carbonate de butylène (BC), le carbonate de diméthyle (DMC), le carbonate de diéthyle (DEC), le carbonate méthyl-éthyle (MEC), le carbonate de dipropyle (DPC), le carbonate de méthyle et de propyle (MPC), le carbonate d'éthyle et de propyle (EPC), le carbonate de vinylène (VC), ou un de leurs mélanges ;
- des esters, tels que par exemple le méthyle acétate, l'éthyle acétate, le n-propyle acétate, le diméthyle acétate, le méthyle propionate, l'éthyle propionate, une caprolactone, ou un de leurs mélanges ;
- des éthers, linéaires ou cycliques, tels que par exemple le diméthoxyéthane (DME), les éthers méthyliques des oligoéthylène glycols de 2 à 5 unités oxyéthylène, le dioxolane, le dioxane, le dibutyle éther, un hydrofurane (e.g. le tétrahydrofurane (THF) ou le 2-méthyl- tétrahydrofurane (2MeTHF)), ou un de leurs mélanges ;
- des cétones, tels que par exemple la cyclohexanone;
- des alcools, tels que par exemple l'alcool éthylique, l'alcool isopropylique ;
- des nitriles, tels que par exemple l'acétonitrile ;
- des dérivés nitrés ;
- des amides, tels que le diméthyl-formamide ;
- des sulfones, tels que l'ethyl-méthylsulfone, le sulfolane, le methyl sulfolane ;
- des alkylsulfamides ; et
- des hydrocarbures partiellement hydrogénés.

Les solvants particulièrement préférés sont les carbonates cycliques.

De préférence, l'électrolyte de l'invention peut comprendre un mélange d'au moins deux solvants décrits ci-avant.

Le solvant polymère polaire peut être choisi parmi les polymères solvatants, réticulés ou non, portant ou non des groupes ioniques greffés. Un polymère solvatant est un polymère qui comporte des unités solvatantes contenant au moins un hétéroatome choisi parmi le soufre, l'oxygène, l'azote et le fluor.

A titre d'exemple de polymères solvatants, on peut citer les polyéthers de structure linéaire, peigne ou à blocs, formant ou non un réseau, à base de poly(oxyde d'éthylène), ou les copolymères contenant le motif oxyde d'éthylène ou oxyde de propylène ou allylglycidyléther, les polyphosphazènes, les réseaux réticulés à base de polyéthylène glycol réticulé par des isocyanates ou les réseaux obtenus par polycondensation et portant des groupements qui permettent l'incorporation de groupements réticulables.

On peut également citer les copolymères à blocs dans lesquels certains blocs portent des fonctions qui ont des propriétés rédox. Bien entendu, la liste ci-dessus n'est pas limitative, et tous les polymères présentant des propriétés solvatantes peuvent être utilisés.

Le solvant de l'électrolyte peut comprendre simultanément un solvant liquide aprotique choisi parmi les solvants liquides aprotiques cités ci-dessus et un solvant polymère polaire comprenant des unités contenant au moins un hétéroatome choisi parmi le soufre, l'azote, l'oxygène et le fluor. A titre d'exemple d'un tel polymère polaire, on peut citer les polymères qui contiennent principalement des unités dérivées de l'acrylonitrile, du fluorure de vinylidène, de la N-vinylpyrrolidone ou du méthacrylate de méthyle.

La proportion de liquide aprotique dans le solvant peut varier de 2% (correspondant à un solvant plastifié) à 98% (correspondant à un solvant gélifié).

### Le sel de métal alcalin

Le sel de métal alcalin de l'invention peut être un unique sel de métal alcalin ou un mélange de plusieurs sels de métal alcalin.

Le sel de métal alcalin de l'invention est destiné à être mis en solution dans le solvant de l'électrolyte : l'électrolyte de l'invention comprend ainsi au moins un sel de métal alcalin dissous dans ledit solvant.

Le sel de métal alcalin de l'invention peut être choisi parmi un sel de lithium, un sel de sodium, et un de leurs mélanges.

Le sel de lithium peut être choisi par exemple parmi LiClO₄, LiPF₆, LiBF₄, LiAsF₆, LiNO₃, les sels de lithium ayant un anion perfluoroalcanesulfonate (e.g. le trifluoromethanesulfonate de lithium (LiCF₃SO₃)), les bis(perfluoroalcanesulfonyl)methane de lithium (e.g. bis-(trifluoromethanesulfonyl)methane) de lithium), les bis(perfluoroalcanesulphonyl)imide de lithium (e.g. le bis(perfluoroethanesulfonyl)imide de lithium ou le bis-(trifluoromethanesulfonyl)imide de lithium (LiN(CF₃SO₂)₂ bien connu sous la dénomination LiTFSI)), le bis-(fluoromethanesulfonyl)imide de lithium (LiN(FSO₂)₂), et un de leurs mélanges.

Le sel de sodium peut être choisi par exemple parmi NaClO₄, NaBF₄, NaPF₆, , NaNO₃, , les sels de sodium ayant un anion perfluoroalcanesulfonate, les bis(perfluoroalcanesulfonyl)méthane de sodium, les tris(perfluoroalcanesulfonyl)méthane de sodium, les bis(perfluoroalcanesulfonyl)imide de sodium (e.g. le bis(trifluoromethanesulfonyl)imide de sodium (NaN(CF₃SO₂)₂ bien connu sous la dénomination NaTFSI)), le bis-(fluoromethanesulfonyl)imide de sodium (NaN(FSO₂)₂), et un de leurs mélanges.

### La batterie

Un autre objet de l'invention concerne une batterie fonctionnant par circulation d'ions, comprenant au moins une cellule électrochimique comprenant :
- au moins une électrode positive,
- au moins une électrode négative, et
- un électrolyte compris entre ladite électrode positive et ladite électrode négative,
caractérisée en ce que ledit électrolyte est tel que décrit dans la présente invention.

La batterie selon l'invention peut comprendre une ou plusieurs cellules électrochimiques, ladite cellule électrochimique comprenant ladite électrode négative et ladite électrode positive séparées par ledit électrolyte.

Lorsque la batterie comprend plusieurs cellules électrochimiques, les cellules électrochimiques peuvent être assemblées en série et/ou en parallèle.

Dans un mode de réalisation particulier, la batterie peut en outre comprendre au moins un séparateur et/ou au moins un collecteur de courant, ces éléments étant bien connus de l'homme du métier.

Plus particulièrement, l'électrode positive peut être associée avec au moins un premier collecteur, et l'électrode négative peut être associée avec au moins un deuxième collecteur.

La batterie de l'invention est plus particulièrement une batterie dite « secondaire » ou en d'autres termes, une batterie rechargeable.

La batterie de l'invention peut être de différents types, à savoir par exemple de type Li-ion, Na-ion, Li-air, ou Li-soufre, ces quatre types de batterie étant bien connus par l'homme du métier.

### L'électrode positive

Par électrode positive, on entend classiquement l'électrode qui fait office de cathode, quand la batterie débite du courant (c'est-à-dire lorsqu'elle est en processus de décharge) et qui fait office d'anode lorsque la batterie est en processus de charge.

L'électrode positive peut être celle typiquement utilisée dans les batteries Li-ion, Na-ion, Li-air, ou Li-soufre.

L'électrode positive est typiquement formée à partir d'un matériau composite comprenant au moins une matière active d'électrode positive, éventuellement un agent de conduction électronique, et éventuellement un liant. La matière active d'électrode positive est un matériau capable d'insérer de manière réversible des ions.

A titre d'exemple concernant les batteries Li-ion, la teneur en matière active d'électrode positive dudit matériau composite peut être de 5 à 98% en poids, la teneur en agent de conduction électronique peut être de 0,1 à 30% en poids, et la teneur en liant peut être de 0 à 25% en poids, par rapport au poids total de matériau composite.

Dans un premier mode de réalisation propre aux batteries Li-ion, la matière active d'électrode positive est notamment capable d'insérer réversiblement des ions lithium à un potentiel supérieur au potentiel de fonctionnement de l'électrode négative.

La matière active peut comprendre notamment un certain nombre d'oxydes bien connus de l'homme du métier.

A titre d'exemple de matière active, on peut citer le dioxyde de manganèse (MnO₂) ; l'oxyde de fer ; l'oxyde de cuivre ; l'oxyde de nickel ; les oxydes composites lithium-manganèse (e.g. LiₓMn₂O₄ ou LiₓMnO₂) ; les oxydes composites lithium-nickel (e.g. LiₓNiO₂) ; les oxydes composites lithium-cobalt (e.g. LiₓCoO₂) ; les oxydes composites lithium-nickel-cobalt (e.g. LiNi_{1-y}Co_{y}O₂) ; les oxydes composites lithium-nickel-cobalt-manganèse (e.g. LiNiₓMn_{y}Co_{z}O₂ avec x+y+z=1) ; les oxydes composites lithium-nickel-cobalt-manganèse enrichis en lithium (e.g. Li₁₊ₓ(NiMnCo)₁₋ₓO₂) ; les oxydes composites de lithium et de métal de transition ; les oxydes composites de lithium-manganèse-nickel de structure spinelle (e.g. LiₓMn_{2-y}Ni_{y}O₄) ; les oxydes lithium-phosphore de structure olivine (e.g. LiₓFePO₄, LiₓFe_{1-y}Mn_{y}PO₄ ou LiₓCoPO₄) ; le sulfate de fer (Fe₂(SO₄)₃) ; les oxydes de vanadium (e.g. V₂O₅).

Les oxydes composites de lithium et de métal de transition peuvent être les oxydes composites suivants :
- Li(Ni,Co,Mn)O₂ bien connu sous la dénomination NMC, tel que par exemple Li(Ni_{1/3}Mn_{1/3}Co_{1/3})O₂ ;
- Li(Ni,Co,Al)O₂ bien connu sous la dénomination NCA, tel que par exemple Li(Ni_{0,8}Co_{0,15}Al_{0,05})O₂ ; ou
- Li(Ni,Co,Mn,Al)O₂.

L'agent de conduction électronique peut être un matériau carboné, par exemple du noir de carbone, du noir d'acétylène, du graphite naturel ou synthétique, des nanotubes de carbone, ou un de leurs mélanges.

Le liant peut être un polymère choisi par exemple parmi les copolymères d'éthylène et de propylène contenant éventuellement un motif permettant la réticulation ; les copolymères styrène-butadiène, tels que par exemple les caoutchoucs de styrène-butadiène (SBR) ; les copolymères acrylonitrile-butadiène (ABR) ; les poly(tétrafluoroéthylène), tels que par exemple le polytétrafluoroétylène (PTFE) ou le polyvinylidène difluoride (PVDF) ; les dérivés de cellulose, tels que par exemple la carboxyméthyle cellulose (CMC) ou l'hydroxyéthylcellulose (HEC).

Dans un deuxième mode de réalisation propre aux batteries Na-ion, la matière active d'électrode positive est notamment capable d'insérer réversiblement des ions sodium à un potentiel supérieur au potentiel de fonctionnement de l'électrode négative.

A titre d'exemple de matière active, on peut citer les fluorophosphates lamellaires Na₂TPO₄F dans lesquels T représente un élément divalent choisi parmi Fe, Mn, Co, et Ni, qui peuvent être remplacés partiellement par Mg ou Zn ; des fluorophosphates différents des fluorophosphates précités, lesdits fluorophosphates étant choisis parmi Na₃V₂(PO₄)₂F₃, Na₃V₂(PO₄)₃ et NaVPO₄F ; les fluorosulfates NaT'SO₄F dans lesquels T' représente au moins un élément choisi parmi Fe, Mn, Co, V et Ni, dont une partie peut être remplacée par Mg et une partie des groupements sulfates SO₄²⁻ peut être remplacée par le groupement iso-stère et iso-charge PO₃F²⁻ ; les polysulfures Na₂Sₙ (1≤n≤6), et les sels de sodium du dimercaptothiadiazole et du dimercaptooxazole ; les dithiocarbamates Na[CS₂NR'R"] dans lesquels chacun des groupes R' et R" représente un radical méthyle, éthyle, ou propyle, ou bien R' et R" formant un cycle (par exemple la pyrrolidine ou la morpholine).

L'agent de conduction électronique et le liant peuvent être ceux décrits ci-avant pour l'électrode positive la batterie Li-ion.

Dans un troisième mode de réalisation propre aux batteries Li-air, l'électrode positive est constituée de carbone, notamment poreux, et éventuellement d'un catalyseur, tel qu'un oxyde métallique du type MnO₂ ou Mn₃O₄, sous forme finement divisée.

Dans un quatrième mode de réalisation propre aux batteries Li-soufre, l'électrode positive est constituée de soufre élémentaire mélangé à du carbone, préférablement absorbé dans les pores d'un mésocarbone.

### L'électrode négative

Par électrode négative, on entend classiquement l'électrode qui fait office d'anode, quand la batterie débite du courant (c'est-à-dire lorsqu'elle est en processus de décharge) et qui fait office de cathode, lorsque la batterie est en processus de charge.

L'électrode négative peut être celle typiquement utilisée dans les batteries Li-ion, Na-ion, Li-air, ou Li-soufre.

L'électrode négative est typiquement formée à partir d'un matériau composite comprenant au moins une matière active d'électrode négative, éventuellement un agent de conduction électronique, et éventuellement un liant. La matière active d'électrode négative est un matériau capable d'insérer de manière réversible des ions.

A titre d'exemple concernant les batteries Li-ion, la teneur en matière active d'électrode négative dudit matériau composite peut être d'au moins 60 % en poids, la teneur en agent de conduction électronique peut être de 0 à 30% en poids, et la teneur en liant peut être de 0 à 30% en poids, par rapport au poids total de matériau composite.

Dans un premier mode de réalisation propre aux batteries Li-ion, la matière active d'électrode négative peut être un matériau capable d'insérer de manière réversible des ions lithium.

Ce matériau peut être notamment un carbone dur, un carbone tendre, un carbone à dureté intermédiaire, un graphite naturel ou artificiel, un dicarboxylate de lithium (en particulier le téréphtalate de lithium). La matière active peut en outre être un alliage de lithium (par exemple un alliage silicium-lithium ou étain-lithium) ou un autre composé intermétallique de lithium (par exemple le composé LiAI), un titanate de lithium de type Li₄Ti₅O₁₂ ou TiO₂, éventuellement dopé par Mg, ou le dioxyde de molybdène ou de tungstène. Lorsque le matériau d'électrode négative contient un alliage de Li ou un composé intermétallique de lithium comme matière active, il contient nécessairement un agent de conduction électronique.

L'agent de conduction électronique et le liant peuvent être respectivement ceux décrits ci-avant pour l'électrode positive de la batterie Li-ion.

Dans un deuxième mode de réalisation propre aux batteries Na-ion, la matière active d'électrode négative est un matériau capable d'insérer de manière réversible des ions sodium.

Ce matériau peut être notamment un carbone mésoporeux, un dicarboxylate de sodium (en particulier les téréphtalates de sodium), une ferrite de sodium NaₓFeO₂, un titanate de sodium Na_{2+x'}Ti₃O₇ (0 ≤ x' ≤ 2), un titanate de sodium et d'aluminium NaₓTi_{1-z}Al_{z}O₂ (0 ≤ x ≤ 1, 0 ≤ z ≤ 0,4) de structure lamellaire, également désigné par "hollandite", ou par un alliage de sodium, par exemple un alliage étain-sodium ou un alliage plomb-sodium.

L'agent de conduction électronique et le liant peuvent être ceux décrits ci-avant pour l'électrode positive de la batterie Li-ion.

Dans un troisième mode de réalisation propre aux batteries Li-air, l'électrode négative est constituée de lithium métallique.

Dans un quatrième mode de réalisation propre aux batteries Li-soufre, l'électrode négative est constituée de lithium métallique.

### Le séparateur

Le séparateur est classiquement positionné entre l'électrode positive et l'électrode négative, permettant ainsi d'éviter que l'électrode positive soit en contact physique direct avec l'électrode négative. Le séparateur est classiquement un matériau électriquement isolant.

Le séparateur peut être avantageusement imprégné et/ou recouvert d'électrolyte.

Il est caractérisé par une mouillabilité élevée avec l'électrolyte, notamment il a de préférence un angle de contact avec l'électrolyte, inférieur à 20°.

Plus particulièrement, le séparateur peut être un matériau non tissé tel que des fibres de polymère, ou un matériau poreux tel qu'un matériau polymère disposé en une ou plusieurs couches.

Le polymère peut être choisi par exemple parmi le polyéthylène (PE), le polypropylène (PP), les polyimides (PI), le polyéthylène téréphtalate (PET), et un de leurs mélanges.

Dans un mode de réalisation particulier, le matériau polymère poreux peut être un tricouche composé d'une couche de polyéthylène intercalée entre deux couches de polypropylène.

D'autres matériaux bien connus de l'homme du métier peuvent bien entendu être utilisés tels que les séparateurs recouverts de céramique ou de composés à base de polyaramides (PAI) ou d'un mélange céramique/PAI.

### Le collecteur de courant

Le matériau d'électrode peut être porté par un collecteur de courant. Dans un mode de réalisation particulier, les deux faces du collecteur de courant peuvent être recouvertes du matériau d'électrode : on parle alors d'électrode double face.

Le collecteur de courant peut être constitué par un matériau conducteur, en particulier par un matériau métallique qui peut être choisi par exemple parmi le cuivre, un alliage de cuivre, l'aluminium, un alliage d'aluminium, le fer, et un alliage de fer (e.g. l'acier).

D'autres caractéristiques et avantages de la présente invention apparaîtront à la lumière de la description d'exemples non limitatifs de l'utilisation d'un additif selon l'invention.
La figure la représente l'évolution de la capacité en fonction du nombre de cycle, pour un électrolyte comprenant l'additif de l'invention et pour un électrolyte ne comprenant pas ledit additif, à une température de 20°C.
La figure 1b représente l'évolution de la capacité en fonction du nombre de cycle, pour un électrolyte comprenant l'additif de l'invention et pour un électrolyte ne comprenant pas ledit additif, à une température de 45°C.
La figure 2a représente l'abondance relative du composé 1₁ issu de la dégradation de l'électrolyte au cours du cyclage, pour un électrolyte comprenant l'additif de l'invention et pour un électrolyte ne comprenant pas ledit additif, cyclé à une température de 20°C.
La figure 2b représente l'abondance relative du composé 1₁ issu de la dégradation de l'électrolyte au cours du cyclage, pour un électrolyte comprenant l'additif de l'invention et pour un électrolyte ne comprenant pas ledit additif, cyclé à une température de 45°C.
La figure 3a représente l'évolution du flux de chaleur dégagé à l'interface graphite lithié/électrolyte en fonction de la température, pour un électrolyte comprenant l'additif de l'invention et pour un électrolyte ne comprenant pas ledit additif, cyclé à une température de 20°C.
La figure 3b représente l'évolution du flux de chaleur dégagé à l'interface graphite lithié/électrolyte en fonction de la température, pour un électrolyte comprenant l'additif de l'invention et pour un électrolyte ne comprenant pas ledit additif, cyclé à une température de 45°C.

### Exemples

Afin de montrer les avantages de la présente invention, une cellule électrochimique a été réalisée et comprend les couches successives suivantes :
- un premier collecteur de courant,
- une électrode positive,
- un séparateur imprégné d'un électrolyte,
- une électrode négative, et
- un deuxième collecteur de courant.
L'ensemble de ces cinq éléments forme un système multicouche.

L'électrolyte de la cellule électrochimique, qui imprègne le séparateur, est soit un électrolyte I1 selon l'invention, soit un électrolyte C1 en tant qu'exemple comparatif, les électrolytes I1 et C1 étant décrits ci-après.

La cellule électrochimique est positionnée à l'intérieur d'un contenant de type enveloppe souple en aluminium, bien connue sous l'anglicisme *« pouch cell ».*

### L'électrode positive

L'électrode positive est formée à partir d'un matériau composite comprenant 94% en poids de NMC de formule Li(Ni_{1/3}Mn_{1/3}Co_{1/3})0₂ en tant que matière active d'électrode positive, 3% en poids de carbone en tant qu'agent de conduction électronique, et 3% en poids de PVDF en tant que liant, par rapport au poids total de matériau composite.

L'électrode positive forme une couche d'une épaisseur de 60 µm.

Elle est associée à un collecteur de courant en aluminium de 20 µm d'épaisseur.

### L'électrode négative

L'électrode négative est formée à partir d'un matériau composite comprenant 94% en poids de graphite en tant que matière active d'électrode négative, 2% en poids de carbone en tant qu'agent de conduction électronique, et 4 % en poids d'un mélange 50/50 (% en poids) de CMC et de SBR en tant que liant, par rapport au poids total de matériau composite.

L'électrode négative forme une couche d'une épaisseur de 60 µm.

Elle est associée à un collecteur de courant en cuivre de 10 µm d'épaisseur.

### Le séparateur

Le séparateur est un matériau polymère poreux, formé d'une couche de polyéthylène intercalée entre deux couches de polypropylène.

Le séparateur, formé de ces trois couches, a une épaisseur de 25 µm.

### Les électrolytes I1 et C1

Les électrolytes I1 et C1 sont des électrolytes liquides.

L'électrolyte C1 est uniquement constitué d'une solution comprenant 1 mol/L de LiPF₆ en tant que sel de lithium, ce sel étant dissout dans un solvant comprenant un mélange 50/50 (% en poids) d'EC et de DMC.

L'électrolyte I1 comprend l'électrolyte C1 dans lequel a été ajouté 0,5 % en poids de l'additif de l'invention, par rapport au poids total de l'électrolyte I1.

L'additif de l'invention utilisé dans cet exemple (cf. électrolyte I1) est le composé A1 de formule suivante (numéro CAS 100517-17-7) :

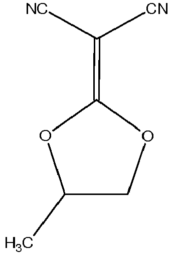

Cet additif peut également être facilement synthétisé selon la publication scientifique de W. J. Middleton and V. A. Engelhardt, J. Am. Chem. Soc. 80, p. 2793, 1958.

La cellule électrochimique est cyclée. Chaque cycle dure environ 10 heures, et comprend une charge d'environ 5 heures et une décharge d'environ 5 heures. Après chaque charge et après chaque décharge, une pause ou temps de relaxation de 30 minutes est réalisé.

Dans un premier mode de réalisation, 400 cycles sont réalisés à température ambiante (20°C).

Dans un deuxième mode de réalisation, 100 cycles sont réalisés à une température supérieure à 20°C, en plaçant la cellule électrochimique dans une étuve à 45°C.

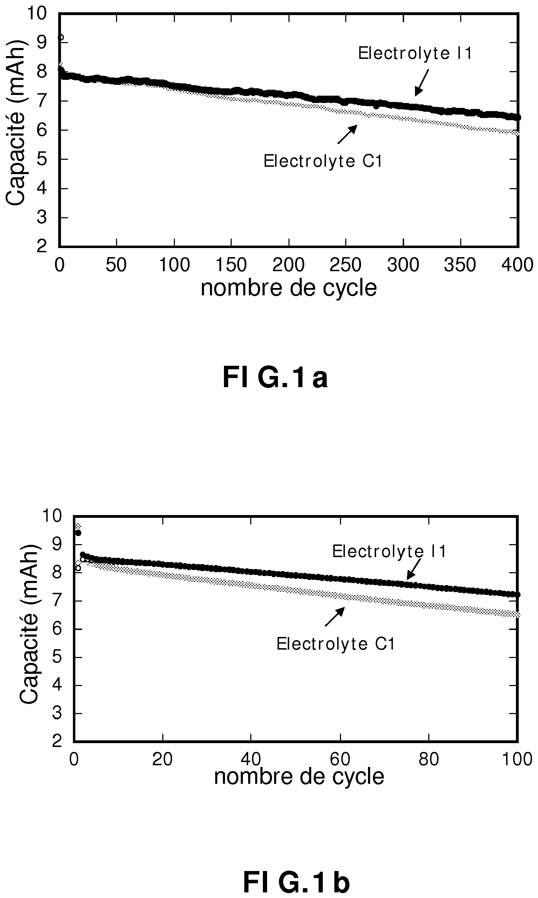

Différentes propriétés ont été mesurées et l'ensemble des résultats est regroupé dans les figures 1a, 1b, 2a, 2b, 3a et 3b.

Les figures 1a et 1b représentent l'évolution de la capacité (en milliampères/heure) en fonction du nombre de cycle, pour les électrolytes I1 et C1, à une température de 20°C et de 45°C respectivement.

La capacité est mesurée pendant les cycles, à l'aide d'un multipotentiostat VMP3 (commercialisé par la société Biologic), connecté aux électrodes de la cellule électrochimique.

On s'aperçoit clairement que la présence du composé A1 dans l'électrolyte I1 permet d'améliorer la rétention de capacité lors du cyclage à 20°C ainsi qu'à 45°C.

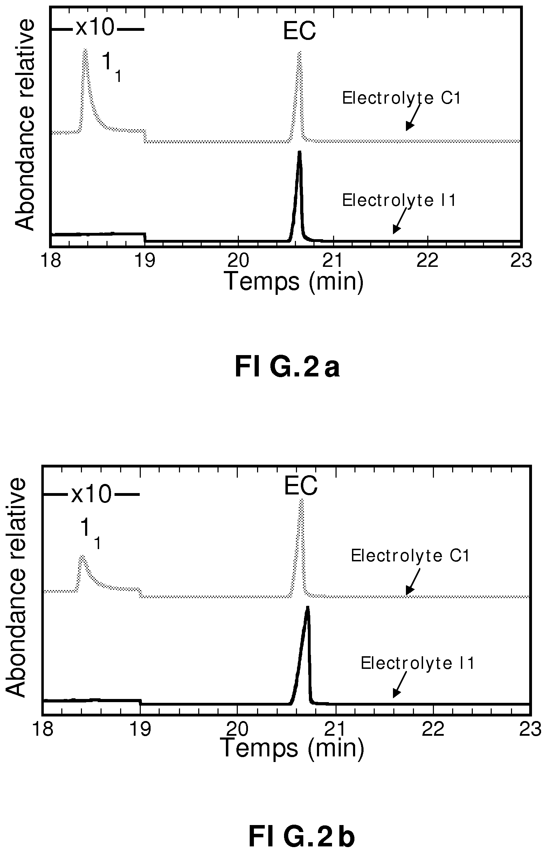

Les figures 2a et 2b représentent l'abondance relative du composé 1₁ issu de la dégradation de l'électrolyte au cours du cyclage, pour les électrolytes I1 et C1, après cyclage à une température de 20°C et de 45°C respectivement.

L'abondance relative est mesurée à l'aide d'un chromatographe GC/ MS sur l'électrolyte une fois les cycles terminés. Plus particulièrement, à la fin des cycles, le séparateur imprégné d'électrolyte est retiré de la cellule électrochimique, et l'électrolyte est alors mis en solution dans un solvant du type acétonitrile. Enfin, un volume dudit électrolyte (dilué dans l'acétonitrile) est injecté dans le chromatographe.

Dans la partie gauche des figures 2a et 2b, entre la 18^{ème} et la 19^{ème} minute, est représenté le pic de la molécule « 1₁ », qui a été grossit 10 fois (« x10 »).

La molécule appelée « 1₁ » est le diméthyle 2,5-dioxahexane dicarboyxlate, que l'on retrouve dans la publication scientifique de G. Gachot et al., Journal of Power Sources 178 (2008), pages 409-421. Cette molécule est issue des processus de dégradation de l'électrolyte au cours du cyclage et reportée comme étant un indicateur du caractère passivant de la SEI.

Il est clair sur ces figures que la présence du composé A1 dans l'électrolyte I1 inhibe la formation de la molécule « 1₁ ».

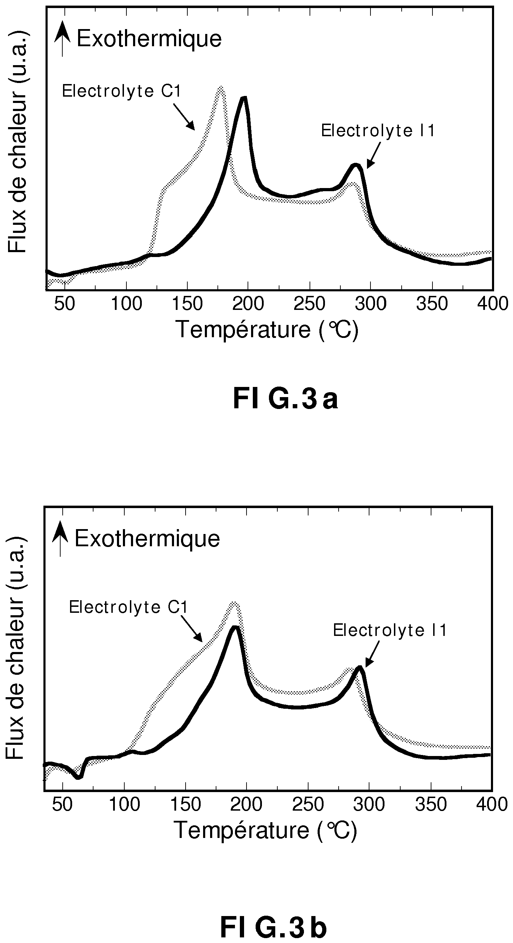

Les figures 3a et 3b représentent l'évolution du flux de chaleur (unité arbitraire u.a.) dégagé à l'interface graphite lithié/électrolyte en fonction de la température (en degré Celsius), pour les électrolytes I1 et C1, cyclés à une température de 20°C et de 45°C respectivement.

Le flux de chaleur est mesuré par analyse calorimétrique différentielle (DSC) avec une rampe de température de 10°C/min sous atmosphère d'argon. L'énergie calorifique correspond à l'énergie totale dégagée à l'interface électrode négative/électrolyte, durant la mesure DSC (phénomène exothermique). Pour ce faire, à la fin des cycles, l'électrode négative (graphite lithié) en contact avec l'électrolyte, et contenant notamment de l'électrolyte dans ses pores, est retirée de la cellule électrochimique. Puis, une portion de ladite électrode est récupérée afin d'être analysée par DSC.

Les figures 3a et 3b montrent que la présence du composé A1 dans l'électrolyte I1 permet de repousser à plus haute température le processus d'emballement thermique à l'interface électrode négative/électrolyte.

Le composé A1 selon l'invention, utilisé en tant qu'additif dans l'électrolyte, permet avantageusement de former une couche de passivation préalablement à la réduction des solvants contenus dans l'électrolyte. Plus particulièrement, la polarisation de la liaison C-O du composé A1 est augmentée contre toute attente par la présence du groupement 1,1-dicyanovinyle qui ne contient que des atomes d'azote et de carbone moins électronégatifs que l'oxygène. De ce fait, le composé A1 peut se réduire plus facilement que par exemple la liaison C-O du carbonate d'éthylène (EC) utilisé dans le mélange de solvant.

Par conséquent, la présence de l'additif selon l'invention dans un électrolyte pour batterie fonctionnant par circulation d'ions, s'avère tout particulièrement bénéfique au cyclage à 20 et 45°C. En effet, la rétention de capacité est meilleure et le processus de dégradation des solvants est limité de façon significative, voire empêché. De même, le processus d'emballement thermique à l'interface électrode négative/électrolyte est initié à plus haute température.

## Revendications

1. Utilisation d'au moins un composé en tant qu'additif dans un électrolyte pour batterie fonctionnant par circulation d'ions, ledit composé comprenant au moins un groupement 1,1-dicyanovinyle, **caractérisée en ce que** ledit composé est choisi parmi un composé A, un composé B, et un de leurs mélanges,
- le composé A étant représenté par la formule suivante : 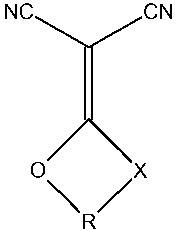 dans laquelle R est un groupement choisi parmi un groupement alkylène, éventuellement substitué ; un groupement alcénylène, éventuellement substitué ; un groupement halogéno-alkylène, éventuellement substitué ; et un groupement halogéno-alcénylène, éventuellement substitué ; et X est choisi parmi un atome d'oxygène, un groupement azoté, et un groupement alkylène ;
- le composé B étant représenté par la formule suivante : 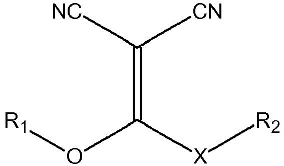 dans laquelle R₁ et R₂ sont des groupements identiques ou différents, choisis parmi des groupements alkyle, linéaires ou ramifiés ; des groupements alcényle, linéaires ou ramifiés ; des groupements halogéno-alkyle, linéaires ou ramifiés ; et des groupements halogéno-alcényle, linéaires ou ramifiés ; et X est choisi parmi un atome d'oxygène, un groupement azoté, et un groupement alkylène.

2. Utilisation selon la revendication 1, **caractérisée en ce que** le groupement R est un groupement en C₂-C₁₀.

3. Utilisation selon la revendication 2, **caractérisée en ce que** le groupement R est choisi parmi les groupements -CH₂-CH₂-, -CH₂-CH₂-CH₂- et -CH(CH₃)-CH₂-.

4. Utilisation selon la revendication 1, **caractérisée en ce que** le groupement R₁ et/ou R₂ est un groupement en C₁-C₁₀.

5. Utilisation selon la revendication 4, **caractérisée en ce que** le groupement R₁ et/ou R₂ est choisi parmi les groupements -CH₂-CH₃, -CH₂-CH₂-CH₃ et -CH(CH₃)-CH₃.

6. Utilisation selon l'une quelconque des revendications précédentes, **caractérisée en ce que** ledit composé est non ionique.

7. Electrolyte comprenant au moins un solvant, et au moins un sel de métal alcalin, **caractérisé en ce que** l'électrolyte comprend en outre au moins le composé en tant qu'additif, ledit composé étant tel que défini dans l'une quelconque des revendications 1 à 6, et/ou la forme réduite dudit additif.

8. Electrolyte selon la revendication 7, **caractérisé en ce qu'**il comprend de 0,1 à 10,0 % en poids dudit composé par rapport au poids total de l'électrolyte.

9. Electrolyte selon la revendication 7 ou 8, **caractérisé en ce que** le solvant est un solvant aprotique.

10. Electrolyte selon l'une quelconque des revendications 7 à 9, **caractérisé en ce que** le sel de métal alcalin est choisi parmi un sel de lithium, un sel de sodium, et un de leurs mélanges.

11. Utilisation d'un électrolyte selon l'une quelconque des revendications 7 à 10, dans une batterie fonctionnant par circulation d'ions.

12. Batterie fonctionnant par circulation d'ions, comprenant au moins une cellule électrochimique comprenant :
- au moins une électrode positive,
- au moins une électrode négative, et
- un électrolyte compris entre ladite électrode positive et ladite électrode négative,
**caractérisée en ce que** ledit électrolyte est tel que défini dans l'une quelconque des revendications 7 à 10.

## Patentansprüche

1. Verwendung von mindestens einer Verbindung als Additiv in einem Elektrolyt für eine Batterie, die durch Ionenfluss funktioniert, wobei die Verbindung mindestens eine 1,1-Dicyanovinyl-Gruppierung umfasst, **dadurch gekennzeichnet, dass** die Verbindung ausgewählt ist aus einer Verbindung A, einer Verbindung B und einer ihrer Mischungen,
- wobei die Verbindung A dargestellt ist durch die folgende Formel: 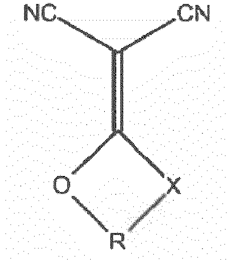 wobei R eine Gruppierung ist, ausgewählt aus einer Alkylen-Gruppierung, eventuell substituiert; einer Alcenylen-Gruppierung, eventuell substituiert; einer Halogenoalkylen-Gruppierung, eventuell substituiert; und einer Halogenoalcenylen-Gruppierung, eventuell substituiert; und X ausgewählt ist aus einem Sauerstoffatom, einer Stickstoff-Gruppierung und einer Alkylen-Gruppierung;
- wobei die Verbindung B dargestellt ist durch die folgende Formel: 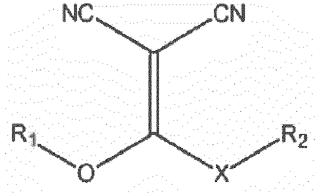 wobei R₁ und R₂ identische der verschiedene Gruppierungen sind, ausgewählt aus Alkyl-Gruppierungen, linear oder verzweigt; Alcenyl-Gruppierungen, linear oder verzweigt; Halogenoalkyl-Gruppierungen, linear oder verzweigt; und Halogenoalcenyl-Gruppierungen, linear oder verzweigt; und X ausgewählt ist aus einem Sauerstoffatom, einer Stickstoff-Gruppierung und einer Alkylen-Gruppierung.

2. Verwendung nach Anspruch 1, **dadurch gekennzeichnet, dass** die R-Gruppierung eine Gruppierung mit C₂ - C₁₀ ist.

3. Verwendung nach Anspruch 2, **dadurch gekennzeichnet, dass** die R-Gruppierung ausgewählt ist aus den Gruppierungen -CH₂-CH₂-, -CH₂-CH₂-CH₂- und -CH(CH₃)-CH₂-.

4. Verwendung nach Anspruch 1, **dadurch gekennzeichnet, dass** die R₁- und/oder R₂-Gruppierung eine Gruppierung mit C₁-C₁₀ ist.

5. Verwendung nach Anspruch 4, **dadurch gekennzeichnet, dass** die R₁- und/oder R₂-Gruppierung ausgewählt ist aus den Gruppierungen -CH₂-CH₃, - CH₂-CH₂-CH₃ und -CH(CH₃)-CH₃.

6. Verwendung nach einem der vorhergehenden Ansprüche, **dadurch gekennzeichnet, dass** die Verbindung nicht ionisch ist.

7. Elektrolyt, umfassend mindestens ein Lösemittel und mindestens ein Alkalimetallsalz, **dadurch gekennzeichnet, dass** der Elektrolyt außerdem mindestens die Verbindung als Additiv umfasst, wobei die Verbindung wie in einem der Ansprüche 1 bis 6 definiert und/oder die reduzierte Form des Additivs ist.

8. Elektrolyt nach Anspruch 7, **dadurch gekennzeichnet, dass** es von 0,1 bis 10,0 Gewichtsprozent der Verbindung mit Bezug auf das Gesamtgewicht des Elektrolyts umfasst.

9. Elektrolyt nach Anspruch 7 oder 8, **dadurch gekennzeichnet, dass** das Lösemittel ein aprotisches Lösemittel ist.

10. Elektrolyt nach einem der Ansprüche 7 bis 9, **dadurch gekennzeichnet, dass** das Alkalimetallsalz ausgewählt ist aus einem Lithiumsalz, einem Natriumsalz und einer ihrer Mischungen.

11. Verwendung eines Elektrolyts nach einem der Ansprüche 7 bis 10 in einer Batterie, die durch Ionenfluss funktioniert.

12. Batterie, die durch Ionenfluss funktioniert, umfassend mindestens eine elektrochemische Zelle, umfassend:
- mindestens eine positive Elektrode,
- mindestens eine negative Elektrode und
- einen Elektrolyten, der zwischen der positiven Elektrode und der negativen Elektrode enthalten ist,
**dadurch gekennzeichnet, dass** der Elektrolyt wie in einem der Ansprüche 7 bis 10 definiert ist.

## Claims

1. Use of at least one compound as an additive in a battery electrolyte operating by ion circulation, wherein the compound comprises at least one 1,1-dicyanovinyl group, **characterized in that** the compound is selected from a compound A, a compound B, and a mixture thereof,
wherein the compound A is represented by the following formula: 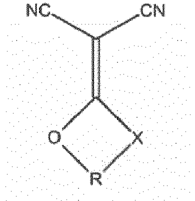 wherein R is a group selected from among an optionally substituted alkylene group; an optionally substituted alkenylene group; an optionally substituted haloalkylene group; and an optionally substituted haloalkenylene group; while X is selected from an oxygen atom, a nitrogen group, and an alkylene group;
wherein the compound B is represented by the following formula: 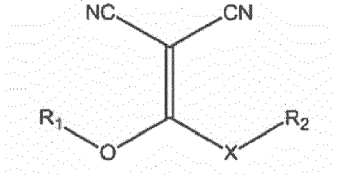 wherein R₁ and R₂ are the same or different groups selected from linear or branched alkyl groups; linear or branched alkenyl groups; linear or branched haloalkyl groups; and linear or branched haloalkenyl groups; while X is selected from an oxygen atom, a nitrogen group, and an alkylene group.

2. Use according to claim 1, **characterized in that** the group R is a C₂-C₁₀ group.

3. Use according to claim 2, **characterized in that** the group R is selected from the group -CH₂-CH₂-, -CH₂-CH₂-CH₂- and -CH(CH₃)-CH₂-.

4. Use according to claim 1, **characterized in that** the R₁ and/or R₂ group is a C₁-C₁₀ group.

5. Use according to claim 4, **characterized in that** the R₁ and/or R₂ group is selected from the -CH₂-CH₃, -CH₂-CH₂-CH₃ and -CH(CH₃)-CH₃ groups.

6. Use according to any one of the preceding claims, **characterized in that** the compound is nonionic.

7. Electrolyte comprising at least one solvent, and at least one alkali metal salt, **characterized in that** the electrolyte further comprises at least the compound as an additive, wherein the compound is as defined in any one of the claims 1 to 6, and/or the reduced form of the additive.

8. Electrolyte according to claim 7, **characterized in that** it comprises from 0.1 to 10.0% by weight of the compound relative to the total weight of the electrolyte.

9. Electrolyte according to claim 7 or 8, **characterized in that** the solvent is an aprotic solvent.

10. Electrolyte according to any one of the claims 7 to 9, **characterized in that** the alkali metal salt is selected from a lithium salt, a sodium salt, and a mixture thereof.

11. Use of an electrolyte according to any one of the claims 7 to 10 in a battery operated by ion circulation.

12. Ion circulation battery comprising at least one electrochemical cell comprising:
- at least one positive electrode,
- at least one negative electrode, and
- an electrolyte between the positive electrode and the negative electrode,
**characterized in that** the electrolyte is as defined in any one of the claims 7 to 10.
